(19) **Europäisches Patentamt**
**European Patent Office**
**Office européen des brevets**

(11) **EP 3 945 636 B1**

(12) **FASCICULE DE BREVET EUROPEEN**

(45) Date de publication et mention
de la délivrance du brevet:
**09.08.2023 Bulletin 2023/32**

(21) Numéro de dépôt: **21185858.4**

(22) Date de dépôt: **15.07.2021**

(51) Classification Internationale des Brevets (IPC):
*H01Q 3/26* (2006.01)    *G01S 7/28* (2006.01)
*H01Q 21/22* (2006.01)    *H01Q 21/29* (2006.01)
*G01S 7/40* (2006.01)    *G01S 13/42* (2006.01)
*G01S 13/02* (2006.01)

(52) Classification Coopérative des Brevets (CPC):
**G01S 7/2813; G01S 7/4026; G01S 13/42;**
**H01Q 3/26; H01Q 21/22; H01Q 21/29;**
G01S 2013/0245

(54) **PROCEDE DE MODIFICATION D'UN DIAGRAMME DE RAYONNEMENT D'UN RESEAU ANTENNAIRE, ET RADAR METTANT EN ŒUVRE UN TEL PROCEDE**

VERFAHREN ZUR VERÄNDERUNG DES STRAHLUNGSDIAGRAMMS EINES ANTENNENNETZES UND RADAR ZUR UMSETZUNG EINES SOLCHEN VERFAHRENS

METHOD FOR MODIFYING A DISPERSION DIAGRAM OF AN ANTENNA ARRAY, AND RADAR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2020 FR 2007957**

(43) Date de publication de la demande:
**02.02.2022 Bulletin 2022/05**

(73) Titulaire: **THALES**
**92400 Courbevoie (FR)**

(72) Inventeurs:
• **VEYRAC, Yoan**
**33700 MERIGNAC (FR)**
• **MAZEAU, Thierry**
**33700 MERIGNAC (FR)**
• **GARREC, Patrick**
**33700 MERIGNAC (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2008 030 412**    **US-B1- 9 780 448**
**US-B2- 7 280 070**

## Description

L'invention se situe dans le domaine des systèmes radar ou des systèmes de communications, fixes ou mobiles, terrestres, marins ou aéroportés, utilisant des antennes à balayage électronique de type AESA (Active Electronically Scanned Array).

Un problème technique à résoudre consiste à modifier le diagramme de rayonnement d'antennes actives 1D ou 2D, en particulier en réduisant un ou plusieurs lobes secondaires en affectant le moins possible le lobe principal, et/ou en générant plusieurs lobes principaux.

Les antennes actives sont composées d'un réseau d'éléments rayonnants commandés par des modules pilotables en phase positionnés sur le réseau, un module commandant un ou plusieurs éléments rayonnants. L'application de déphasages calculés sur les différents modules permet de réaliser de façon connue le dépointage électronique du diagramme d'antenne. Etant donné que le diagramme de rayonnement est identique en émission et en réception, la description qui suit traite de manière indifférenciée l'émission et la réception.

Le diagramme d'un réseau antennaire correspond à la transformée de Fourier de sa fonction d'illumination, donnant la matrice des poids des éléments rayonnants du réseau antennaire. Le diagramme d'un réseau classique illuminé de manière homogène correspond donc à un sinus cardinal, dont le premier lobe secondaire présente un niveau à environ -13 dB du lobe principal. Il y a également de nombreux autres lobes secondaires ou diffus, en fonction de la topologie de l'antenne.

Tous ces lobes peuvent être problématiques puisqu'ils constituent des directions où de l'énergie est émise par l'antenne, et d'où des échos et des brouilleurs peuvent venir perturber l'antenne. Parmi les problèmes liés aux lobes secondaires on peut citer, plus particulièrement dans le cadre de radars aéroportés :

- La détectabilité du radar par les lobes secondaires en émission ;

- Les signaux forts provenant des lobes secondaires dirigés vers le sol, comprenant également la raie d'altitude (chemin le plus court entre le porteur et le sol), qui peuvent faire entrer les récepteurs en fonctionnement non-linéaire et produire des intermodulations ;

- Le brouillage du radar, intentionnel ou non, par les lobes secondaires en réception ;

- La perte de sensibilité causée par le fouillis ramené par les lobes secondaires d'émission et de réception en azimut, dans le cadre de modes non-ambigus en distance ;

- La perte de sensibilité causée par le bruit de phase ou les parasites portés par le fouillis ramené par les lobes secondaires dirigés vers le sol, en émission et en réception.

Un problème technique adressé consiste donc à modifier le diagramme d'antenne de manière à réduire le niveau des lobes secondaires qui peuvent s'avérer les plus gênants, en émission comme en réception, sans réduire les performances du lobe principal de l'antenne.

L'état de l'art présente de nombreuses solutions pour surmonter les effets indésirables liés aux lobes secondaires.

Les solutions les plus connues effectuent une pondération de l'antenne en amplitude, par une fonction d'apodisation destinée à réduire les lobes secondaires, utilisant plusieurs types de fenêtres de pondération (Blackmann, Gaussienne, Harris, Hamming, Hann, ...). Cette solution réduit le niveau des lobes secondaires au détriment de la largeur du lobe principal, entraînant une légère perte de gain dans le lobe principal. Ces techniques reposent sur le contrôle d'une atténuation variable des éléments du réseau. Toute fonction de pondération à coefficients réels conduit à des modifications symétriques sur le diagramme de rayonnement. Cette technique est donc relativement limitée dans son emploi. De plus, il est nécessaire d'avoir une résolution d'atténuation fine pour pouvoir prétendre aux niveaux de réjection théoriques offerts par les différentes fenêtres de pondération.

Pour les systèmes de lutte contre les brouillages involontaires liés aux lobes secondaires, les méthodes d'OLS (Opposition des Lobes Secondaires) sont connues, mais nécessitent des antennes supplémentaires ou auxiliaires et des récepteurs supplémentaires. Cela nécessite aussi un traitement du signal conséquent estimant les gains respectifs des deux voies de réception. Le principe, connu, est d'appairer les réceptions faites dans les antennes pseudo omnidirectionnelles (cardioïde) avec les caractéristiques des lobes secondaires, tant en amplitude qu'en phase. On identifie et compense ainsi les réceptions faites dans les lobes secondaires en utilisant les antennes auxiliaires. Ces méthodes ont un coût, notamment en termes de consommation, de poids et de puissance de calcul et donc dissipation. De plus les antennes électroniques ayant des pointages dans des angles différents, avec des variations de gain des lobes secondaires et du lobe principal, il n'est pas possible d'avoir une antenne cardioïde fixe. Cette antenne auxiliaire doit suivre les pointages du faisceau principal.

D'autres techniques existent pour supprimer des lobes secondaires, en fabriquant des zéros dans certaines directions du diagramme de rayonnement. Cela se fait généralement au moyen de la formation de faisceau par le calcul à la réception, lorsque les signaux sont numérisés. Il est toutefois compliqué de numériser individuellement chaque élément rayonnant pour généraliser cette méthode.

Une pondération peut également être réalisée individuellement au niveau de chaque élément rayonnant, par l'utilisation d'un coefficient complexe généré via la modulation de l'amplitude du signal et de sa phase. Cela permet de façonner le diagramme de rayonnement afin de réduire les lobes les plus gênants dans chaque situation considérée. Toutefois pour obtenir une large profondeur de rejection, nécessaire dans de nombreux cas d'application, il faut disposer de modules avec une grande résolution de réglage en amplitude et en phase, ce qui peut entraîner une complexité et un coût élevé.

Les méthodes de l'état de l'art présentent donc une limitation dans les modifications possibles sur le diagramme d'antenne (cas des pondérations réelles), ou bien nécessitent des modules avec des résolutions fines de contrôle de phase et d'atténuations, impliquant une grande complexité et donc un coût important.

On peut citer particulièrement le document CN104931935 A divulguant l'utilisation de deux réseaux d'antennes pondérés et combinés, avec une méthode OLS en réception pure. La solution présentée n'est robuste qu'à une seule erreur, sur la direction d'arrivée. Un document US 4 959 653 B divulgue une méthode d'OLS numérique sur un réseau d'antennes numérisées individuellement, en réception pure, et une formation en parallèle d'un canal principal et d'un canal secondaire avec des pondérations complexes. La comparaison entre les deux canaux permet de savoir si un signal provient du lobe principal ou d'un lobe secondaire. La méthode proposée par ce document élimine les lobes secondaires par traitement numérique, coûteux en calcul, ce qui ne répond pas au problème posé ici. Les documents US7280070, US2008/030412 et US9780448 illustrent l'état de l'art dans le domaine du réseau d'antennes.

Un but de l'invention est notamment d'améliorer les caractéristiques de diminution des lobes secondaire d'un réseau antennaire tout en répondant au problème technique posé précédemment. A cet effet, l'invention a pour objet un procédé de modification d'un diagramme de rayonnement d'un réseau antennaire, ledit réseau étant composé d'éléments rayonnant reliés à des modules actifs, la forme dudit diagramme étant fonction des amplitudes et phases appliquées auxdits modules actifs, une modification dudit diagramme étant réalisée par une pondération complexe desdites amplitudes et phases fonction d'un besoin donné, procédé dans lequel on définit un parcours parmi lesdits modules actifs le long duquel on détermine successivement le coefficient de pondération complexe de chaque module :

- dans une étape, on calcule la fonction de pondération complexe théorique répondant audit besoin donné, conduisant à l'obtention d'un ensemble de coefficients complexes associés à chaque module actif ;
- dans une autre étape, on multiplie l'ensemble desdits coefficients complexes par le coefficient complexe lié au dépointage dudit diagramme que l'on souhaite appliquer ;

   A l'issue de ces deux étapes on obtient un ensemble de coefficients complexes théoriques associés auxdits modules actifs ;

   Dans une étape suivante, on définit l'ensemble des coefficients complexes à appliquer, dit coefficients complexes corrigés, selon le processus itératif suivant :

- le coefficient corrigé (Mcorrige (1, 1)) du premier module dudit parcours (71) étant le coefficient qui minimise l'écart avec le coefficient théorique (Mtheorique (1, 1)) calculé pour ledit premier module, on calcule l'erreur de quantification (Err11) comme étant la différence entre le coefficient théorique et le coefficient corrigé ;
- le coefficient corrigé (Mcorrige (j, k)) d'un module dudit parcours (71) étant le coefficient qui minimise l'écart avec un coefficient cible égal au coefficient théorique (Mtheorique (j, k)) calculé pour ledit module augmenté de l'erreur de quantification (Errj, k-1) calculée pour le module précédent immédiatement ledit module ;
- l'erreur de quantification (Errj, k) associée audit module (j,k) étant alors calculée comme étant la différence entre ledit coefficient cible et ledit coefficient corrigé (Mcorrige (j, k)).

L'étape dans laquelle on calcule la fonction de pondération complexe théorique précède l'étape dans laquelle on multiplie l'ensemble des coefficients complexes théoriques par le coefficient complexe lié au dépointage.

Ledit besoin donné est par exemple la réduction d'au moins un lobe secondaire. En variante, le besoin donné est la réduction d'un trou dans le lobe principal pour atténuer une cible qui sature le radar.

Ledit parcours est par exemple du type boustrophedon, du type spirale ou du type serpentin.

L'invention a également pour objet un radar, équipé d'un réseau d'éléments rayonnants reliés à des modules actifs, comportant une chaîne d'émission et de réception connectée audit réseau et un système de pointage et de pondération commandant les amplitudes et phases desdits modules actifs, ledit système étant configuré pour mettre en oeuvre le procédé tel que décrit précédemment.

D'autres caractéristiques et avantages de l'invention apparaîtront à l'aide de la description qui suit, faite en regard de dessins annexés qui représentent :

La figure 1, un exemple de réseau antennaire ;

La figure 2, un exemple d'architecture de contrôle en amplitude et phase de modules actifs du réseau antennaire précité ;

La figure 3, un diagramme d'antenne pondéré en amplitude par une fonction de Gauss en regard d'un diagramme sans pondération ;

La figure 4, un diagramme d'antenne dépointé et pondéré en amplitude par une fonction de Gauss en regard d'un diagramme de même dépointé mais sans pondération ;

La figure 5, un diagramme dépointé avec pondération complexe en regard des autres diagrammes de la figure 4 ;

La figure 6, un diagramme dépointé avec pondération complexe quantifiée en regard des autres diagrammes de la figure 5 ;

La figure 7, un exemple de parcours parmi les modules actifs d'un réseau antennaire le long duquel est obtenue de manière itérative une matrice corrigée ;

La figure 8, un diagramme dépointé avec pondération complexe quantifiée corrigée, obtenue selon l'invention, en regard des autres diagrammes de la figure 6 ;

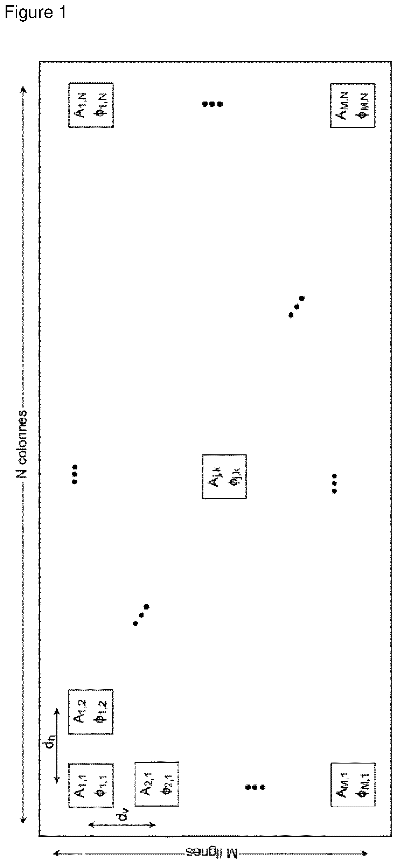

La figure 1 présente un exemple de réseau antennaire plan (2D) à partir duquel est décrite la présente invention. Celle-ci améliore les caractéristiques de réjection des lobes secondaires d'antenne de type AESA linéaire (1D) ou plane (2D). Le réseau antennaire de la figure 1 est réparti sur une grille régulière de pas $d_h$ selon la dimension horizontale et de pas $d_v$ selon la dimension verticale. L'invention s'applique cependant pour des réseaux quelconques.

Le réseau comporte M lignes et N colonnes d'éléments rayonnant, chaque élément rayonnant disposant classiquement d'un moyen de contrôle d'amplitude et de phase individuel. A cet effet, chaque élément rayonnant, de ligne j et de colonne k, est connecté à un module actif apte à lui appliquer un contrôle en amplitude $A_{j,k}$ et en phase $\Phi_{j,k}$.

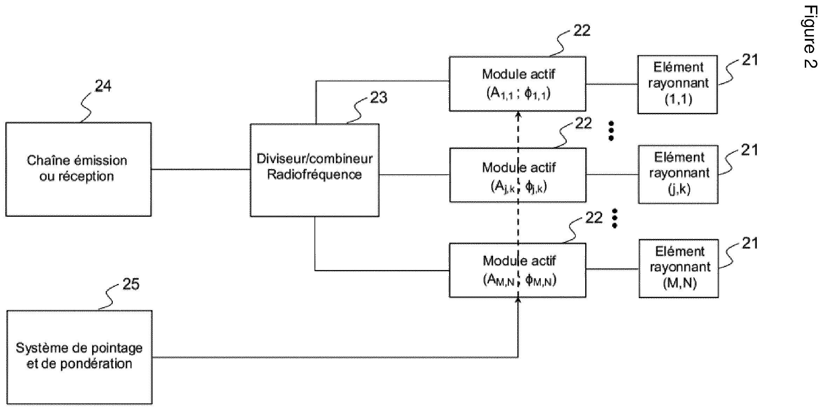

La figure 2 est une représentation synoptique de l'architecture d'un système d'émission et de réception comportant le réseau antennaire de la figure 1, cette représentation illustrant plus particulièrement l'architecture du contrôle en amplitude et phase des éléments rayonnants. Chaque élément rayonnant 21 est connecté à un module actif 22 comportant des circuits de contrôle d'amplitude et de phase. Les modules sont reliés via un circuit 23 à la chaîne d'émission et de réception 24 dont la structure est bien connue. En réception, les signaux sortant des modules actifs sont combinés 23 en radiofréquence pour entrer dans la chaîne de réception. En émission, le signal issu de la chaîne d'émission est divisé 23 vers les différents modules actifs. Les signaux sortant des modules actifs 22 sont alors combinés dans l'air via les éléments rayonnants.

Un système de pointage et de pondération 25 commande les valeurs d'amplitude et de phase pour chaque module actif 22. C'est au niveau de ce système de pointage et de pondération que le procédé selon l'invention est appliqué notamment.

Dans le fonctionnement classique d'une antenne active, les commandes d'amplitude et de phase des modules actifs sont déterminées comme décrit ci-après. La première étape d'une commande de pointage consiste à calculer les déphasages à appliquer à chaque module actif 22 pour réaliser un dépointage électronique du lobe principal de l'antenne. Cela consiste à appliquer un gradient de phase qui dépend de l'angle du faisceau d'antenne visé et de la position des éléments rayonnants dans le réseau. Si l'on considère, comme représenté sur la figure 1, un réseau de pas constants $d_h$ et $d_v$ selon les deux dimensions, les commandes de phase $\Delta\varphi(j, k)$ à appliquer pour chaque élément rayonnant j,k sont définis par la fonction suivante :

$$\Delta\varphi(j, k) = \frac{2\pi.d_h}{\lambda}.k.u + \frac{2\pi.d_v}{\lambda}.j.v \qquad (1)$$

- $\lambda$ étant la longueur d'onde liée à la fréquence porteuse ;

- u étant le sinus directeur de l'angle entre la direction de visée et un plan vertical ;

- v étant le sinus directeur entre l'angle de visée et un plan horizontal et ;

- $d_h$ et $d_v$ étant les pas du réseau antennaire, selon les axes horizontaux et verticaux respectivement.

Cette fonction de pointage (1) donne les déphasages $\Delta\varphi(j,k)$ à appliquer aux modules actifs.

En plus de ce déphasage, on peut en général appliquer une pondération d'antenne, le plus souvent à la réception uniquement, de façon à réduire les niveaux des lobes secondaires tout en affectant le moins possible le lobe principal. Il existe un grand nombre de fenêtres de pondération possibles, l'une des plus classiques étant la fenêtre Gaussienne. Les paramètres de ces fenêtres permettent de régler le compromis entre :

- la réduction des lobes secondaires et ;

- l'élargissement et perte de gain du lobe principal.

On accepte en général une perte de gain du lobe principal d'environ 1 dB. Le choix de la fonction de pondération conduit au réglage des amplitudes des signaux émis par les modules actifs 22. La fonction de pondération est alors échantillonnée spatialement par la grille du réseau actif. Les valeurs appliquées au niveau des atténuateurs sont ensuite quantifiées par le pas de résolution de l'atténuateur.

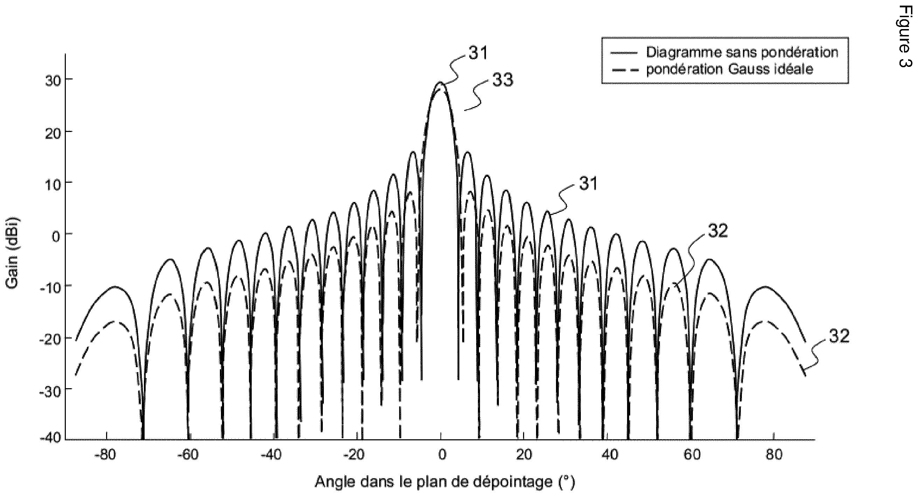

La figure 3 présente le diagramme de rayonnement brut 31 d'un réseau, sans pondération, et le diagramme 32 pondéré par une fonction gaussienne, conduisant à une perte de 1 dB dans le lobe principal 33. On observe, pour le diagramme pondéré 32, une diminution uniforme des lobes secondaires 34 d'environ 7 dB au prix de la diminution de gain de 1 dB du lobe principal, et d'un élargissement d'environ 15% de l'ouverture à 3 dB de ce lobe principal. Une réjection plus importante des lobes secondaires demande une pondération en amplitude plus forte, ce qui entraîne une dégradation du lobe principal plus importante encore, non admissible en pratique.

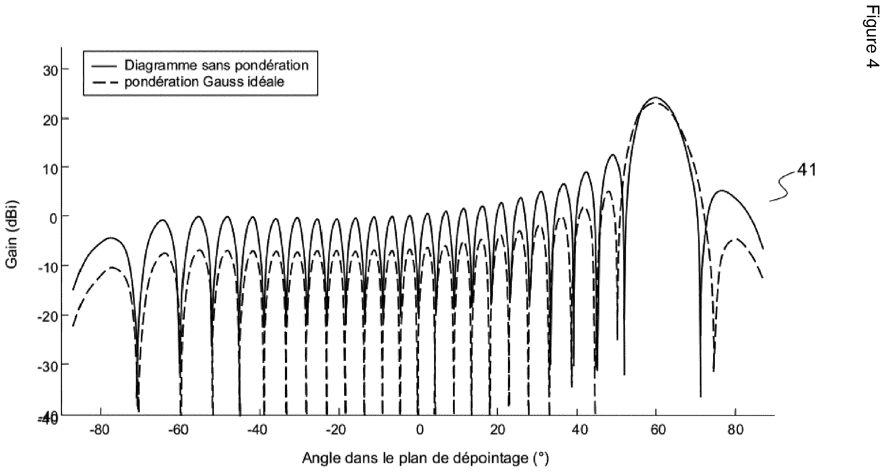

La figure 4 présente les diagrammes de la même antenne, brut et pondéré, mais avec l'application d'un dépointage de 60°. Dans le cas de l'antenne dépointée à 60°, on remarque qu'il subsiste un seul lobe secondaire 41, angulairement élargi, dans la direction des angles plus grands (vers +90°). Dans le cas où le dépointage est dirigé vers le sol, ce lobe secondaire 41 représente l'énergie rayonnée proche de la verticale. Il peut alors provoquer des retours forts (captation de signaux réfléchis et/ou réémis par le sol) qui peuvent être gênants. Une meilleure réjection de ce lobe secondaire est donc nécessaire dans cet exemple.

Le cas présenté ici sert simplement d'exemple, il existe bien d'autres cas où l'on peut souhaiter une réjection importante dans certains domaines angulaires précis du diagramme, en particulier lorsque certains angles sont brouillés, ou bien lorsque l'on souhaite émettre discrètement vis-à-vis de certaines directions particulières notamment.

La pondération du réseau en amplitude conduit à un filtrage symétrique du diagramme de rayonnement, par rapport à la direction de pointage qui opère ainsi une translation du diagramme, dans le domaine des sinus directeurs.

Afin de rejeter plus spécifiquement et plus efficacement certains angles, sans dégrader le lobe principal, on peut utiliser une pondération complexe du réseau. Une telle pondération permet de créer des pics ou des trous dans le diagramme. Les commandes d'amplitude et de phase appliquées aux modules actifs correspondent dans ce cas à la combinaison de la fonction de pointage (qui donne une loi de déphasage) et à la fonction de pondération complexe que l'on choisit en fonction du besoin.

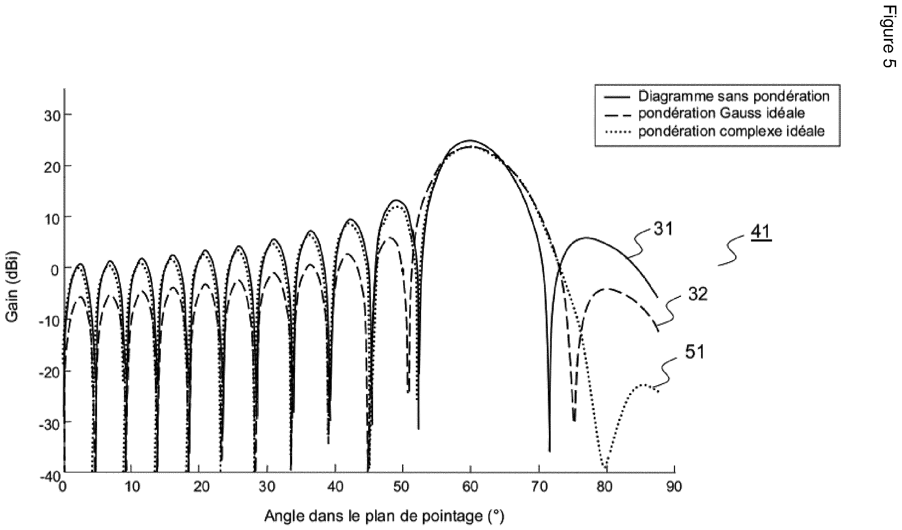

Dans l'exemple précédent du dépointage à 60°, on souhaiterait éliminer le lobe secondaire 41 situé à droite du lobe principal. A cet effet il suffit de calculer, à partir la configuration d'antenne présentée en figure 1, les coefficients d'un lobe de même amplitude que ce secondaire et en opposition de phase. On ajoute alors ces coefficients à la fonction de pondération de l'antenne. Les amplitudes mises en jeu étant relativement faibles, cela revient dans les faits à obtenir une petite modulation des coefficients en amplitude et en phase par rapport à la configuration d'illumination homogène. Il faut ensuite multiplier ces coefficients par les coefficients complexes de déphasage pour réaliser le dépointage électronique. On obtient alors le diagramme représenté en figure 5.

La figure 5 présente donc un diagramme 51 dépointé avec une pondération complexe, en regard du diagramme pondéré 32 selon une pondération de Gauss, le diagramme brut 31 étant toujours représenté. Une pondération de Gauss 32 et une pondération complexe 51 à annulation du lobe secondaire de droite peuvent donc être comparées, en réglant les paramètres de manière à observer 1 dB de perte de gain sur le lobe principal dans les deux cas. La figure 5 montre que la pondération complexe laisse quasiment inchangés les lobes secondaires de gauche, et elle se focalise sur la création d'une réjection ciblée sur le lobe secondaire de droite 41. On obtient dans ce cas une réjection environ 20 dB plus efficace que la pondération de Gauss, sur ce lobe précis 41. Par ailleurs, le lobe principal n'est élargi que dans la direction de ce lobe, et pas dans l'autre direction, ce qui conduit à un élargissement du lobe principal environ deux fois moins important que dans le cas de la pondération de Gauss.

La pondération complexe apparait donc comme une technique intéressante pour réaliser des ajustements du diagramme de rayonnement adaptés à divers besoins. Toutefois les réjections importantes mises en jeu reposent sur l'utilisation de coefficients complexes relativement précis en amplitude et en phase, faute de quoi les réjections attendues ne peuvent pas être obtenues. Or dans pour certaines antennes actives de radar ou de télécommunications, il n'est pas envisageable de disposer de modules qui disposent de déphaseurs de haute résolution (quelques degrés) et d'atténuateurs de haute résolution (quelques dixièmes de dB), en particulier pour des raisons de coûts. Dans ces cas, l'utilisation des coefficients complexes devient limitée en pratique.

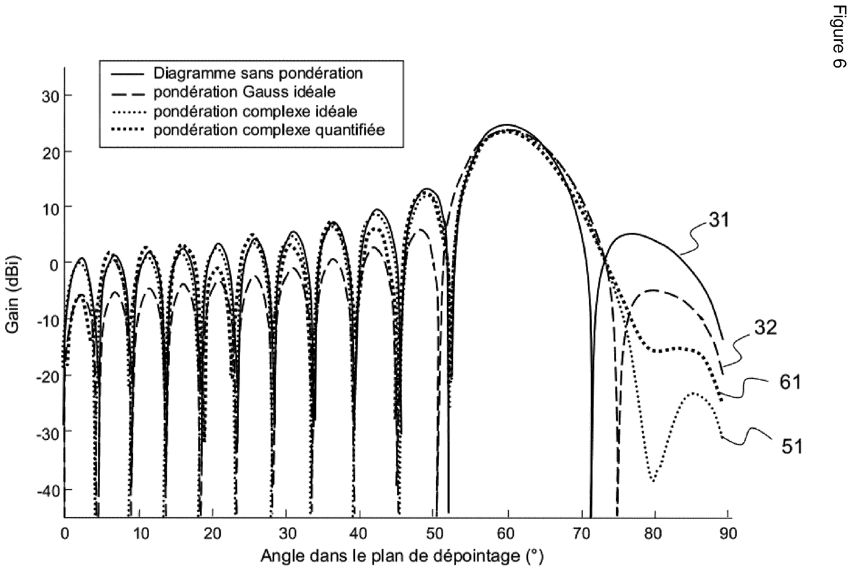

La figure 6 représente, pour la même antenne, une pondération complexe 61 quantifiée avec des déphaseurs et des atténuateurs de résolution moyenne, en regard des diagrammes précédents 31, 32, et notamment du digramme 51 obtenu avec des déphaseurs à haute résolution. Dans cet exemple de la figure 6, la résolution est de 12° de pas de déphasage et 1 dB de pas d'atténuation, comparativement aux autres courbes.

La pondération complexe à coefficients quantifiés (courbe 61) montre une dégradation importante par rapport à la pondération complexe idéale (courbe 51). Dans le présent exemple, la rejection est environ 10 dB moins bonne dans la version à coefficients quantifiés. On remarque en particulier que le pic de réjection observé dans la pondération complexe idéale (à -80°) ne se creuse pas et se transforme en plateau dans la version quantifiée. Il y a donc une perte assez importante du bénéfice de la pondération complexe, qui nécessite une bonne résolution sur les coefficients complexes pour apporter une bonne réjection comme le montre bien la comparaison entre les courbes 61 et 51.

L'invention remédie à ces effets de manque de résolution des coefficients par une adaptation des coefficients appliqués dans la pondération complexe, cette adaptation étant fonction de l'erreur estimée sur les éléments voisins du réseau antennaire. La suite de la description précise la mise en oeuvre de cette méthode selon l'invention.

Dans une première étape, on calcule la fonction de pondération complexe théorique destinée à un besoin spécifique. A titre d'exemple, dans le cas précédent le besoin spécifique est la suppression d'un des lobes secondaires latéraux. On obtient alors une matrice de coefficients complexes destinés à chaque module actif.

Dans une deuxième étape, on multiplie la matrice par le coefficient complexe lié au dépointage que l'on souhaite appliquer, ce qui se traduit par un déphasage au niveau de chaque module, l'amplitude n'étant pas impactée (absence de terme d'amplitude). Il est à noter que ces deux étapes sont commutatives et qu'il est possible de commencer par le déphasage lié au dépointage.

A l'issue de ces deux étapes on obtient une matrice de coefficients complexes associés aux modules actifs, notée $M_{theorique}$ de taille M par N, M étant le nombre de lignes et N le nombre de colonnes de modules actifs du réseau antennaire. La matrice finale est obtenue selon un processus de calcul itératif appliqué à chaque module qui est décrit par la suite. Ce processus itératif est appliqué en suivant un parcours à l'intérieur du réseau antennaire. Il existe plusieurs parcours possible.

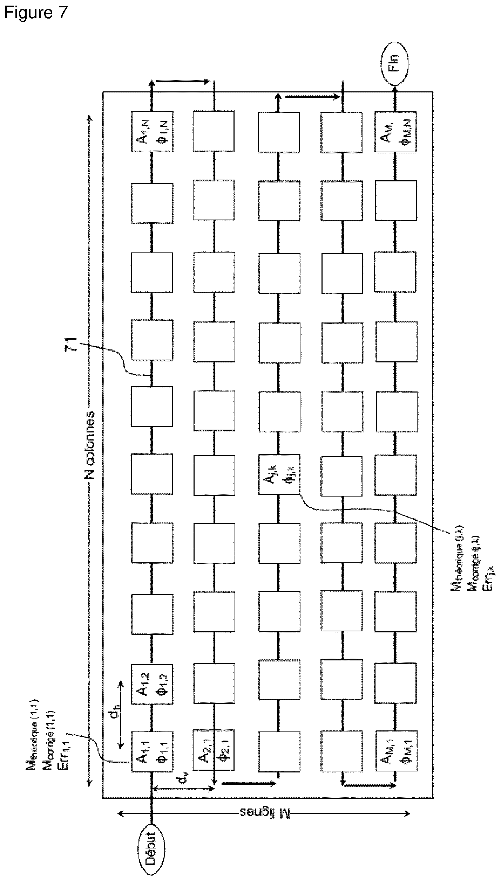

La figure 7 présente un parcours itératif possible 71, selon un circuit en boustrophédon. On peut choisir un parcours selon les lignes ou les colonnes, le parcours de la figure 7 étant un parcours selon les lignes. Une propriété nécessaire au parcours à suivre est qu'il n'y ait pas de discontinuité importante dans les coefficients de deux éléments consécutifs du parcours, propriété notamment respectée par un parcours en boustrophédon. En prenant pour exemple l'antenne et le parcours représentés en figure 7, le procédé d'obtention des coefficients complexes à appliquer se déroule selon le processus itératif décrit ci-après. Les éléments matriciels seront classiquement notés par la suite selon leur position en ligne et colonne, l'élément (j, k) étant situé à la ligne d'ordre j et à la colonne d'ordre k. Le parcours 71 débute au module (1, 1) et finit au module (M, N).

Pour le premier élément (1, 1) situé à la première ligne et à la première colonne, on choisit respectivement les coefficients d'amplitude et de phase qui minimisent les écarts avec le coefficient complexe $M_{theorique}$ (1, 1). Les coefficients d'amplitude et de phase sont choisis dans la résolution matérielle disponible sur les commandes d'amplitude et de phase des modules. Ces coefficients d'amplitude et de phase correspondent alors au premier coefficient $M_{corrige}$ (1, 1) d'une matrice corrigée notée $M_{corrige}$. Cette matrice corrigée étant la matrice qui contient les coefficients qui seront effectivement appliqués aux modules actifs. Elle est obtenue de façon itérative le long du parcours 71.

On calcule ensuite l'erreur commise par la quantification de ce coefficient, cette erreur étant notée $Err_{1,1}$ où :

$$Err_{1,1} = M_{theorique}\,(1,\,1) - M_{corrige}\,(1,\,1)$$

Suivant le parcours 71, on passe ensuite au deuxième élément, c'est-à-dire au module (1, 2). On cherche alors les coefficients d'amplitude et de phase qui minimisent l'erreur avec le coefficient cible qui vaut $M_{theorique}$ (1, 2) + $Err_{1,1}$. Cela conduit à l'obtention du coefficient $M_{corrige}$ (1, 2) de la matrice corrigée. De cette façon, le calcul du deuxième coefficient prend en compte l'erreur $Err_{1,1}$ sur le premier coefficient, en cherchant à le compenser. On calcule également l'erreur commise par la quantification de ce coefficient, cette erreur $Err_{12}$ étant :

$$\text{Err}_{1,2} = \text{M}_{\text{theorique}} (1, 2) + \text{Err}_{1,1} - \text{M}_{\text{corrige}} (1, 2)$$

L'erreur $\text{Err}_{1,2}$ sera à son tour utilisée pour le calcul de $\text{M}_{\text{corrige}} (1, 3)$.

Ainsi, au module $(j, k)$ du parcours on cherche les coefficients d'amplitude et de phase qui minimisent l'erreur (ou l'écart) avec le coefficient cible qui vaut $\text{M}_{\text{theorique}} (j, k) + \text{Err}_{j, k-1}$. Cela conduit à l'obtention du coefficient $\text{M}_{\text{corrige}} (j, k)$ de la matrice corrigée, ce coefficient complexe $\text{M}_{\text{corrige}} (j, k)$ étant formé à partir du coefficient d'amplitude et du coefficient de phase qui minimise l'erreur.

Lors du passage d'une ligne à une autre, par exemple au niveau de la colonne N, le coefficient $\text{M}_{\text{corrige}} (j, N)$ est obtenu en tenant compte de l'erreur $\text{Err}_{j-1,N}$ commise au module voisin $(j-1, N)$. De même si le passage d'une ligne à l'autre s'effectue au niveau de la première colonne, N = 1.

Le processus est itéré tout au long du parcours 71. A la fin du parcours, la matrice corrigée obtenue contient tous les coefficients qui seront appliqués sur les modules actifs de l'antenne. Ce processus itératif peut être assimilé à une transposition du procédé de type $\Sigma\Delta$, utilisé en traitement du signal, dans le domaine géographique. Ce processus de type $\Sigma\Delta$ est ici appliqué géographiquement le long du parcours 71 sur le réseau antennaire.

Le processus proposé par l'invention agit comme un filtre passe-haut sur l'erreur de quantification $\text{Err}_{j,k}$ et comme un filtre passe bas sur la fonction de pondération spatiale.

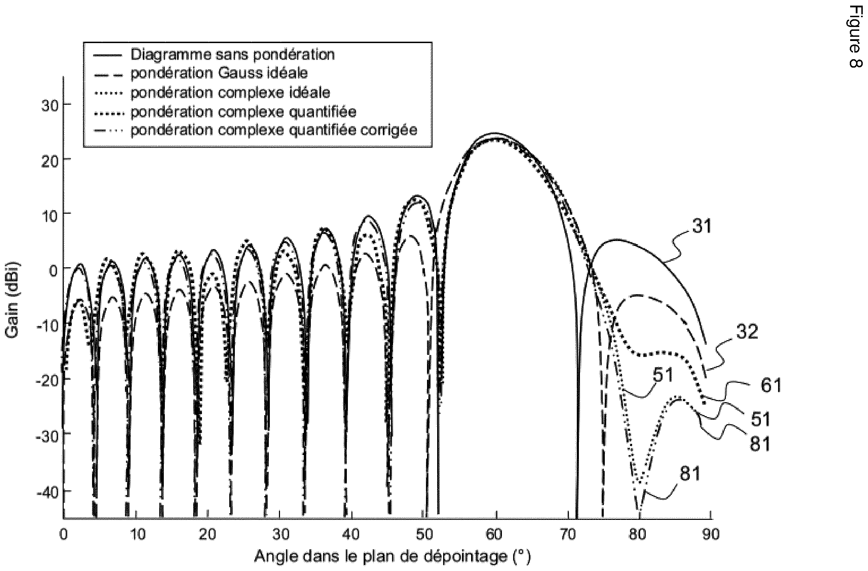

La figure 8 présente, en regard des autres courbes, la courbe 81 représentative du diagramme d'antenne obtenu par application des coefficients d'amplitudes et de phases définis par les coefficients complexes de la matrice corrigée. Ces coefficients d'amplitudes et de phases sont appliqués sur les modules actifs de l'antenne de la figure 1, la matrice corrigée étant celle obtenue précédemment le long du parcours 71.

Par rapport à la courbe 61 qui minimise localement l'erreur de quantification, la courbe 81 produit un résultat bien plus fidèle à la théorie représentée par la courbe 51, avec un niveau de réjection important. Le procédé selon l'invention permet donc d'améliorer grandement les diagrammes de pondération complexe obtenus, en conservant des coefficients d'amplitude et de phase de résolution moyenne.

Il est à noter que le procédé selon l'invention peut s'appliquer à d'autres types de parcours, l'important étant de conserver une progression de proche en proche afin de conserver une continuité dans le coefficient complexe cible à appliquer aux éléments successifs. On peut par exemple utiliser un parcours en spirale partant du centre ou de l'extérieur du réseau antennaire, dans un sens ou dans l'autre. Un autre exemple serait un parcours en serpentins, en dents de scie, ou bien des combinaisons de schémas de parcours basiques.

En particulier, le processus itératif d'obtention des coefficients complexes corrigés (donnant l'amplitude et la phase corrigées) a été faite selon une notation matricielle en regard du réseau 2D de la figure 7. On peut indicer également les modules en fonction de leur position le long du parcours choisi. Les coefficients complexes, théoriques et corrigés, ne sont plus référencés selon un couple $(j, k)$ mais par un numéro d'ordre le long du parcours. On obtient à la fin du parcours un ensemble de coefficients complexes corrigés à appliquer aux modules actifs permettant d'obtenir la modification de diagramme souhaitée, répondant au besoin défini, ce besoin étant en général la réduction d'un ou plusieurs lobes secondaires.

De nombreuses applications peuvent bénéficier de l'invention. Le gain obtenu par le procédé selon l'invention entre la réjection de lobes précis et la qualité du lobe principal permet en outre d'envisager une pondération à l'émission qui est généralement évitée car trop coûteuse en termes de puissance isotrope rayonnée émise (PIRE). Le procédé selon l'invention est en outre peu coûteux en moyens de calcul.

Il est à noter qu'il est également possible de générer toutes sortes de diagrammes complexes, avec plusieurs lobes ou un lobe très large par exemple, grâce au procédé selon l'invention.

L'invention permet avantageusement de synthétiser des diagrammes d'antenne avec de fortes réjections de lobes secondaires, sans avoir besoin de résolution en amplitude et en phase très fine et sans composant matériel supplémentaire.

## Revendications

1. Procédé de modification d'un diagramme de rayonnement d'un réseau antennaire, ledit réseau étant composé d'éléments rayonnants (21) reliés à des modules actifs (22), la forme dudit diagramme étant fonction des amplitudes et phases appliquées auxdits modules actifs (22), dans lequel une modification dudit diagramme étant réalisée par une pondération complexe desdites amplitudes et phases en

   fonction d'un besoin donné, on définit un parcours (71) parmi lesdits modules actifs le long duquel on détermine successivement le coefficient de pondération complexe de chaque module :

   - dans une étape, on calcule la fonction de pondération complexe théorique répondant audit besoin donné, conduisant à l'obtention d'un ensemble de coefficients complexes associés à chaque module actif (22) ;
- dans une autre étape, on multiplie l'ensemble desdits coefficients complexes par le coefficient complexe lié au dépointage dudit diagramme que l'on souhaite appliquer ;
à l'issue de ces deux étapes un ensemble de coefficients complexes théoriques associés auxdits modules actifs étant obtenu ;
- dans une étape suivante, on définit l'ensemble des coefficients complexes à appliquer, dits coefficients complexes corrigés, selon le processus itératif suivant :

- le coefficient complexe corrigé ($M_{corrige}$ (1, 1)) du premier module dudit parcours (71) étant le coefficient qui minimise l'écart avec le coefficient complexe théorique ($M_{theorique}$ (1, 1)) calculé pour ledit premier module, on calcule l'erreur de quantification ($Err_{11}$) comme étant la différence entre le coefficient complexe théorique et le coefficient complexe corrigé ;
- le coefficient complexe corrigé ($M_{corrige}$ (j, k)) d'un module dudit parcours (71) étant le coefficient qui minimise l'écart avec un coefficient cible égal au coefficient complexe théorique ($M_{theorique}$ (j, k)) calculé pour ledit module augmenté de l'erreur de quantification ($Err_{j, k-1}$) calculée pour le module précédant immédiatement ledit module ;
- l'erreur de quantification ($Err_{j, k}$) associée audit module (j,k) étant calculée comme étant la différence entre ledit coefficient cible et ledit coefficient complexe corrigé ($M_{corrige}$ (j, k)) ;

et en ce que l'étape dans laquelle on calcule la fonction de pondération complexe théorique précède l'étape dans laquelle on multiplie l'ensemble des coefficients complexes théoriques par le coefficient complexe lié au dépointage.

2. Procédé selon la revendication 1, **caractérisé en ce que** ledit besoin donné est la réduction d'au moins un lobe secondaire.

3. Procédé selon l'une quelconque des revendications précédentes, **caractérisé en ce que** ledit parcours est du type boustrophédon.

4. Procédé selon l'une quelconque des revendications 1 à 2, **caractérisé en ce que** ledit parcours a la forme d'une spirale.

5. Procédé selon l'une quelconque des revendications 1 à 2, **caractérisé en ce que** ledit parcours a la forme d'un serpentin.

6. Radar, équipé d'un réseau d'éléments rayonnants (21) reliés à des modules actifs (22), comportant une chaîne d'émission et de réception (24) connectée (23) audit réseau et un système (25) de pointage et de pondération commandant les amplitudes et phases desdits modules actifs, **caractérisé en ce que** ledit système (25) est configuré pour mettre en oeuvre le procédé selon l'une quelconque des revendications précédentes.

**Patentansprüche**

1. Verfahren zur Veränderung eines Strahlungsdiagramms eines Antennennetzes, wobei das Netz aus Strahlungselementen (21) besteht, die mit aktiven Modulen (22) verbunden sind, wobei die Form des Diagramms von den Amplituden und Phasen abhängt, die an die aktiven Module (22) angelegt werden, wobei, da eine Veränderung des Diagramms durch eine komplexe Gewichtung der Amplituden und Phasen in Abhängigkeit von einem gegebenen Bedarf erfolgt, eine Strecke (71) zwischen den aktiven Modulen definiert wird, welcher entlang nacheinander der komplexe Gewichtungskoeffizient eines jeden Moduls bestimmt wird:

- in einem Schritt wird die theoretische komplexe Gewichtungsfunktion berechnet, die dem gegebenen Bedarf entspricht, was zum Erhalt eines Satzes von komplexen Koeffizienten führt, die jedem aktiven Modul (22) zugeordnet sind,
- in einem anderen Schritt wird die Gesamtheit der komplexen Koeffizienten mit dem komplexen Koeffizienten multipliziert, der mit der Fehlausrichtung des Diagramms verbunden ist, das man anwenden möchte,
am Ende dieser beiden Schritte wird ein Satz von theoretischen komplexen Koeffizienten erzielt, die den aktiven Modulen zugeordnet sind,
- in einem nächsten Schritt wird die Menge der anzuwendenden komplexen Koeffizienten, die korrigierten komplexen Koeffizienten genannt sind, gemäß dem folgenden iterativen Prozess definiert:

- da der korrigierte komplexe Koeffizient ($M_{korrigierte}$ (1, 1)) des ersten Moduls der Strecke (71) der Koeffizient ist, der die Abweichung von dem theoretischen komplexen Koeffizienten ($M_{theoretische}$ (1, 1)), der für das erste Modul berechnet wurde, minimiert, wird der Quantisierungsfehler ($Err_{11}$) als die Differenz zwischen dem theoretischen komplexen Koeffizienten und dem korrigierten komplexen Koeffizienten berechnet,
- der korrigierte komplexe Koeffizient ($M_{korrigierte}$ (j, k)) eines Moduls der Strecke (71) der Koeffizient ist, der die Abweichung von einem Zielkoeffizienten minimiert, der gleich dem theoretischen komplexen Koeffizienten ($M_{theoretische}$ (j, k)) ist, der für das Modul berechnet wurde, erhöht um den Quantisierungsfehler ($Err_{j, k-1}$), der für das Modul berechnet wurde, das diesem Modul unmittelbar vorausgeht,
- der dem Modul (j, k) zugeordnete Quantisierungsfehler ($Err_{j, k}$) als die Differenz zwischen dem Zielkoeffizienten und dem korrigierten komplexen Koeffizienten ($M_{korrigierte}$ (j, k)) berechnet wird;

und dadurch, dass der Schritt, in dem die theoretische komplexe Gewichtungsfunktion berechnet wird, dem Schritt vorausgeht, in dem die Gesamtheit der theoretischen komplexen Koeffizienten mit dem komplexen Koeffizienten multipliziert wird, der mit der Fehlausrichtung verbunden ist.

2. Verfahren nach Anspruch 1, **dadurch gekennzeichnet, dass** der gegebene Bedarf die Reduzierung von mindestens einer Nebenkeule ist.

3. Verfahren nach einem der vorhergehenden Ansprüche, **dadurch gekennzeichnet, dass** die Strecke eine Strecke vom Boustrophedon-Typ ist.

4. Verfahren nach einem der Ansprüche 1 bis 2, **dadurch gekennzeichnet, dass** die Strecke die Form einer Spirale aufweist.

5. Verfahren nach einem der Ansprüche 1 bis 2, **dadurch gekennzeichnet, dass** der Weg die Form einer Schlangenlinie aufweist.

6. Radar, ausgestattet mit einem Netz von Strahlungselementen (21), die mit aktiven Modulen (22) verbunden sind, umfassend eine Sende- und Empfangskette (24), die mit dem Netz verbunden (23) ist, und ein System (25) zur Ausrichtung und Gewichtung, das die Amplituden und Phasen der aktiven Module steuert, **dadurch gekennzeichnet, dass** das System (25) so konfiguriert ist, dass es das Verfahren nach einem der vorhergehenden Ansprüche durchführt.

**Claims**

1. A method for modifying a radiation pattern of an antenna array, said array being composed of radiation elements (21) which are connected to active modules (22), the shape of the pattern being a function of the amplitudes and phases applied to said active modules (22), wherein a modification of said pattern being carried out by means of a complex weighting of said amplitudes and phases as a function of a given requirement, a path (71), along which the complex weighting coefficient of each module is successively determined, is defined among said active modules:

- in one step, there is calculated the theoretical complex weighting function which meets said given requirement, which leads to obtaining a set of complex coefficients associated with each active module (22) being obtained;
- in another step, the set of said complex coefficients is multiplied by the complex coefficient which is linked to the misalignment of the pattern which it is desirable to apply;
following these two steps, a set of theoretical complex coefficients, associated with said active modules, being obtained;
- in a following step, the set of complex coefficients to be applied is defined, referred to as corrected complex coefficients, in accordance with the following iterative process:

- the corrected complex coefficient ($M_{corrected}$ (1, 1)) of the first module of the path (71) being the coefficient which minimises the deviation from the theoretical complex coefficient ($M_{theoretical}$ (1, 1)) calculated for the first module, the quantification error ($Err_{11}$) is calculated as being the difference between the theoretical complex coefficient and the corrected complex coefficient;
- the corrected complex coefficient ($M_{corrected}$ (j, k)) of a module of said path (71) is the coefficient which minimises the deviation from a target coefficient which is equal to the theoretical complex coefficient ($M_{theoretical}$ (j, k)), calculated for said module, increased by the quantification error ($Err_{j, k-1}$) calculated for the module immediately preceding said module;
- the quantification error ($Err_{j,\,k}$) associated with said module (j, k) is calculated as being the difference between said target coefficient and said corrected complex coefficient ($M_{corrected}$ (j, k));

and in that the step in which the theoretical complex weighting function is calculated precedes the step in which the set of theoretical complex coefficients is multiplied by the complex coefficient linked with the misalignment.

2. The method according to claim 1, **characterised in that** said given requirement is the reduction of at least one secondary lobe.

3. The method according to one of the preceding claims, **characterised in** said the path is of the boustrophedon type.

4. The method according to any one of claims 1 to 2, **characterised in that** said path is in the form of a helix.

5. The method according to any one of claims 1 to 2, **characterised in that** said path is in the form of a coil.

6. A radar which is provided with an array of radiation elements (21) which are connected to active modules (22), comprising a transmitting and receiving channel (24), which is connected (23) to said array, and an alignment and weighting system (25) which controls the amplitudes and phases of the active modules, **characterised in that** said system (25) is configured to implement the method according to any one of the preceding claims.

Figure 1

Figure 2

Elément rayonnant (1,1) — 21

Elément rayonnant (j,k) — 21

Elément rayonnant (M,N) — 21

Module actif $(A_{1,1}\,;\,\phi_{1,1})$ — 22

Module actif $(A_{j,k}\,;\,\phi_{j,k})$ — 22

Module actif $(A_{M,N}\,;\,\phi_{M,N})$ — 22

Diviseur/combineur Radiofréquence — 23

Chaîne émission ou réception — 24

Système de pointage et de pondération — 25

Figure 3

Figure 4

Figure 5

Figure 6

Figure 7

Figure 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104931935 A
- US 4959653 B
- US 7280070 B

- US 2008030412 A
- US 9780448 B